(19) Europäisches Patentamt / European Patent Office / Office européen des brevets

(11) **EP 3 946 717 B1**

(12) **EUROPEAN PATENT SPECIFICATION**

(45) Date of publication and mention
of the grant of the patent:
**10.12.2025  Bulletin 2025/50**

(21) Application number: **20782263.6**

(22) Date of filing: **03.04.2020**

(51) International Patent Classification (IPC):
**B01J 19/24** (2006.01)    **B01J 19/12** (2006.01)
**C08J 11/10** (2006.01)

(52) Cooperative Patent Classification (CPC):
**B01J 19/126; B01J 6/008; B01J 12/005;**
**C10G 1/10; C10G 15/08;** B01J 2219/00141;
B01J 2219/1206; B01J 2219/1248; B01J 2219/1266;
B01J 2219/1269; B01J 2219/1272; B01J 2219/1275;
C08J 11/10

(86) International application number:
**PCT/IB2020/053190**

(87) International publication number:
**WO 2020/202089 (08.10.2020 Gazette 2020/41)**

(54) **MICROWAVE PYROLYSIS REACTOR**

MIKROWELLENPYROLYSEREAKTOR

RÉACTEUR DE PYROLYSE À MICRO-ONDES

(84) Designated Contracting States:
**AL AT BE BG CH CY CZ DE DK EE ES FI FR GB**
**GR HR HU IE IS IT LI LT LU LV MC MK MT NL NO**
**PL PT RO RS SE SI SK SM TR**

(30) Priority:  **05.04.2019  US 201962829947 P**

(43) Date of publication of application:
**09.02.2022  Bulletin 2022/06**

(73) Proprietor: **Pyrowave Inc.**
**Oakville ON L6H OC3 (CA)**

(72) Inventors:
• DOUCET, Jocelyn
Montréal, Québec H4P 0A9 (CA)
• LAVIOLETTE, Jean-Philippe
Montréal, Québec H1W 2P6 (CA)

(74) Representative: **Kolster Oy Ab**
**Salmisaarenaukio 1**
**P.O. Box 204**
**00181 Helsinki (FI)**

(56) References cited:
EP-A2- 0 680 243       WO-A1-2013/016866
WO-A1-2018/018154      WO-A1-2018/177994
WO-A1-2018/177994      WO-A1-2020/064598
CN-A- 101 342 475      CN-A- 101 342 475
CN-U- 207 877 644      US-A- 2 796 587
US-A- 4 647 443        US-A- 4 900 411
US-A- 5 270 515        US-A1- 2003 066 486
US-A1- 2007 295 717    US-A1- 2017 101 584
US-A1- 2017 114 279

**Description**

TECHNICAL FIELD

The present invention relates to the field of pyrolysis, and more particularly to microwave pyrolysis systems.

BACKGROUND

Pyrolysis of products such as biomass and plastics is usually performed in a reactor by adding energy under anaerobic condition, i.e. in an atmosphere deprived of oxygen. There are usually three reaction products: oil, gas and carbon black. In most cases, the pyrolysis process is tuned to maximize the oil yield since it usually has the most value as a source of chemicals or fuel.

The conventional heating source for pyrolysis usually comprises combustion of a fuel-gas to make a flame and hot combustion gases or resistive electrical heating elements. In such conventional pyrolysis systems, the external surface of the reactor is heated so that heat can be transferred to the product to be pyrolyzed via heat conduction through the reactor walls.

However, at least some of the conventional pyrolysis systems have at least some of the following drawbacks.

At least some of the conventional pyrolysis systems provide low oil yield because the heating rate of the product to be pyrolyzed is relatively low, which results in low oil yield. This is due to the fact that the heating rate of the product is determined by the temperature of the vessel wall. i.e. the higher the vessel wall temperature, the higher the product heating rate. The maximum vessel wall heating rate and therefore the final temperature of the product are usually determined by thermal inertia of the vessel, the heat source power, the heat losses, the selection of vessel wall alloy, the surface area and the heat transfer coefficient. All these constraints limit the heating rate of the feedstock. However, selection of alloys that can sustain high temperatures (such as Inconel™ or titanium) increase the capital cost of the system.

Furthermore, low final product temperatures (i.e. low reaction temperatures) result in low reaction rates and also affect the kinetics. Also, since the reactor wall is heated to a temperature higher than the product to be pyrolyzed, the product experiences an increase in temperature as it leaves the reactor wall, which may cause degradation of the product.

In order to overcome at least some the above-described deficiencies of conventional pyrolysis systems, microwave pyrolysis systems have been developed. Such microwave pyrolysis systems use microwaves to heat a product to be pyrolyzed placed into a reactor.

Some of the main advantages of microwave pyrolysis systems over conventional pyrolysis systems include high heating rates which lead to high oil yields, high reaction site temperatures which leads to high reaction rates and improves the kinetics, and low environment temperatures which allows avoiding the degradation of the product of the pyrolysis reaction. Some microwave pyrolysis systems are known from WO 2018/177994 A1 , US 2017/114279 A1, US 2017/101584 A1, WO 2018/018154 A1, EP 0 680 243 A2, CN 207 877 644 U and CN101342475B.

However, some issues with microwave pyrolysis systems exist. One of these issues is directed to the means by which the microwave power is delivered to the reactor. The challenge in power delivery resides in the presence of high intensity electrical fields and the presence of contaminants in chemical reactors.

Usually microwave pyrolysis systems include a microwave waveguide for propagating the microwaves generated by a microwave generator up to the reactor in which pyrolysis will occur. The usual waveguides are rectangular pipes of which the dimensions are set by the microwave wavelength/frequency and microwave reactors generally have internal dimensions that are greater than those of the waveguide. Therefore, the microwave power density is generally greater inside the waveguide (smaller volume) than in the microwave reactor.

At a fixed position inside the reactor and the waveguide, one would experience an electrical and magnetic potential that oscillates in time. If the potential increases above the breakdown voltage of the media, an electrical arc is formed. The electrical arc increases the temperature of the gas and produces a plasma. The plasma is electrically conductive and the oscillating electrical field sustains the electrical arc, which travels in the direction of the highest power density, i.e. in direction of the microwave generator. As it travels towards the microwave generator, the arc damages the metal surfaces and boundaries it touches, i.e. the arc produces sharp edges on metals. The arc can be killed by stopping the microwave injection. Once the microwave injection is resumed, the presence of the sharp edges produced by the previous arc creates points of high electrical field intensity, which increases the risk of going beyond the medium breakdown voltage and promotes the production of another arc. Therefore, the production of arcs leads to higher probabilities of arcing. Since the power density inside the waveguide is usually higher compared to the microwave reactor, the risk of arcing inside the waveguide is higher than in the reactor. Therefore, the waveguide environment must be well controlled (cleanliness, high breakdown voltage, no contamination, smooth surfaces, no sharp edges, etc.).

Pyrolysis is usually accompanied with side reactions that produce carbon black particles. These particles are electrically conductive, fine solid particles. When in suspension in a gas, the presence of carbon black particles decreases the gas breakdown voltage and promotes arcing. The presence of other gases and/or liquid produced by the reaction may also decrease the medium breakdown voltage.

Contaminants deposition on the metal surfaces may also lead to hot spots and arcing. For example, in a fixed carbon black particle, an oscillating electrical field will induce an electrical current. Since the electrical resistance of a carbon black particle is not zero, the carbon black particle heats up due to resistive losses. Hot spots may therefore be produced on metal surfaces, which may lead to surface damage, surface melting, sharp edges and/or arcing.

Regarding couplers used in usual microwave pyrolysis systems, some issues remain. Usually a coupler comprises a physical barrier which should present a low dielectric loss for preventing the dissipation of microwave energy into heat. The process therefore loses efficiency and the barrier is likely to be damaged by the temperature increase (e.g. barrier melting due to the high temperature and failure from thermal shock).

Some usual couplers use a flow of an inert gas (e.g. nitrogen) from the waveguide to the reactor to create the physical barrier. Such a physical barrier can be used for reactors for which the coupler is located in a gas medium otherwise liquids or solids would flow into the waveguide. Such an inert gas barrier requires a high flow of gas, which adds cost for the gas production, and also separation downstream from the pyrolysis products. Furthermore, it may be difficult to prevent contamination from entering the waveguide since pressure fluctuations in the reactor may entrain contaminants into the waveguide.

Some other usual couplers use Teflon™ windows as physical barriers, which have a typical operating temperature of 260°C. This relatively low operating temperature limits the applicability of Teflon™ to low temperature chemical processes. Furthermore, deposition of contaminants such as carbon black particles on a Teflon™ window may result in hot spots on the Teflon™ window surface, which may melt and damage the Teflon™ window. Damage to the Teflon™ window jeopardizes the ability of the physical barrier from preventing contaminants from entering the waveguide. Furthermore, damage to the Teflon window creates zones where solid contaminants are more likely to accumulate leading to more hot spots and arcing across the Teflon window because the solid contaminants can make a conductive path.

Other types of couplers use quartz windows. Quartz has an operating temperature in the range of 1400°C. However, in the case of an arc, a quartz window may not sustain the high temperature of the arc and may therefore be damaged. The effects of this damage are the same as the above-described damages for Teflon™.

Conventional microwave pyrolysis systems use microwave waveguides having a rectangular cross-sectional shape. In such as a rectangular microwave waveguide, the highest electrical field intensity is located at the middle of the long edge of the waveguide. This corresponds to the $TE_{10}$ transmission mode, which is the dominant mode for rectangular waveguides. In this case, the deposition of contaminants may lead to hot spots on the metal, metal damage, product of sharp edges and/or arcing.

Furthermore, impedance matching in microwave systems is usually required to maximize the transmitted power from the microwave generator to the reactor and minimize the reflected power. Impedance matching is usually performed using an iris or stub tuners. The iris is a perforated plate and its impedance is a function of the hole size and geometry. Since both size and geometry are fixed, the impedance of an iris is fixed and may not be changed in real-time during microwave injection into the reactor. An iris is therefore a static impedance matching system.

A tub tuner usually consists of a waveguide section provided with cylindrical stubs (usually 3 stubs) or plungers that are inserted along its long edge. The insertion depth can be varied to change the characteristic impedance of the tuner. Most stub tuners allow the changing of each individual stub's insertion depth in real-time during microwave injection. A stub tuner is therefore a dynamic impedance matching system.

When they are inserted in the microwave field, the stubs are subjected to an electrical and magnetic field, which induces an electrical current on the stub surface. Since the stub material has a non-zero electrical resistance (stubs are usually made of aluminum or copper), resistive heat losses occur on the stubs. Some resistive losses also occur on the waveguide wall, but it is negligible compared to the losses on the stubs. Due to those resistive losses on the stubs, the stubs heat up and its temperature increases. As the stub temperature increases, the stub undergoes thermal expansion such that its length and diameter increases. Because of the thermal expansion, the stub may get squeezed inside the stub casing and may no longer be moved in and out of the tuner. The system then loses its ability to change the tuner's impedance. Furthermore, forcing the stub to move or out may cause mechanical damage to the stub and stub casing.

Therefore, there is a need for an improved microwave pyrolysis system that overcomes at least some of the above-identified drawbacks of prior art systems.

SUMMARY

According to the invention, there is provided a microwave pyrolysis reactor system as defined in the appended claims.

Microwaves are electromagnetic waves: a traveling electrical field perpendicular to a magnetic field. Microwaves used for heating applications have frequencies of 2.45 GHz (low power below 15 kW) and 915 MHz (high power as high as 100 kW) - these frequencies are fixed and determined by international regulations

## BRIEF DESCRIPTION OF THE DRAWINGS

Further features and advantages of the present invention will become apparent from the following detailed description, taken in combination with the appended drawings, in which:

Figure 1 is a cross-section of a microwave pyrolysis system comprising a microwave pyrolysis reactor, a coupler and a tuner, in accordance with a first embodiment;
Figure 2-5 illustrate different views of the microwave pyrolysis reactor of Figure 1;
Figure 6 illustrates a microwave absorbing particle, in accordance with an embodiment;
Figure 7 illustrates the heating of a reactant particle, in accordance with an embodiment;
Figure 8 illustrates a microwave pyrolysis reactor provided with an agitator device, in accordance with an embodiment;

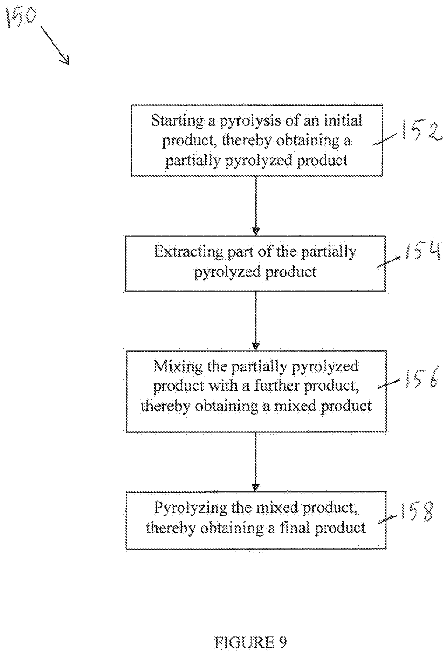

Figure 9 is a flow chart of a method for pyrolyzing a product, in accordance with an embodiment;
Figure 10 illustrates a microwave pyrolysis system comprising a mixing tank for performing the method of Figure 8, in accordance with an embodiment; and
Figures 11 and 12 illustrate the mixing tank of Figure 10.

It will be noted that throughout the appended drawings, like features are identified by like reference numerals.

## DETAILED DESCRIPTION

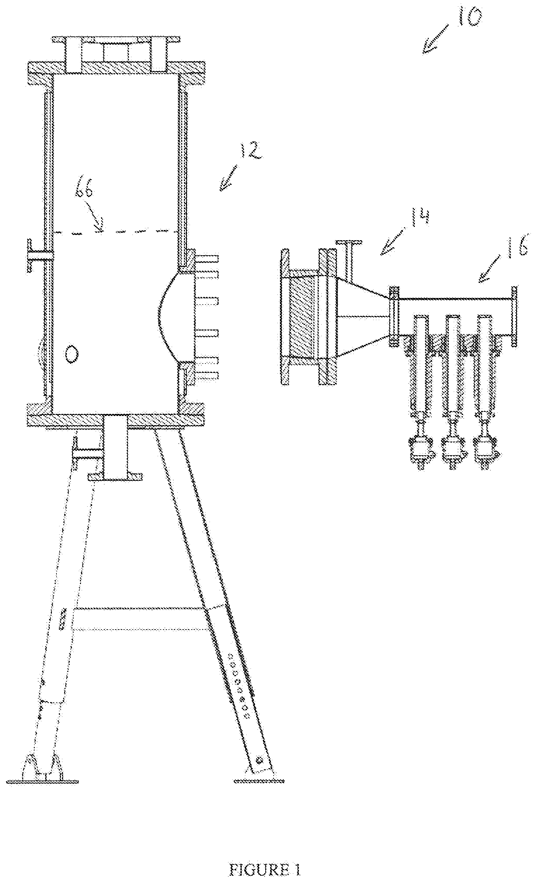

Figure 1 illustrates one embodiment of a microwave pyrolysis system 10 which comprises a reactor or vessel 12, a coupler 14 and a tuner 16. It will be understood that the tuner 16 is connectable to a source of microwaves or microwave generator (not shown) either directly or via a microwave waveguide. In the illustrated embodiment, the tuner 16 is used for guiding the microwave emitted by the microwave generator up to the coupler 14. The tuner 16 may further be used for adjusting the power or amplitude of the microwaves delivered to the coupler 16 and therefore to the reactor 12. The coupler 14 is used for propagating the microwaves coming from the tuner 16 into the reactor 12. The reactor 12 is configured for receiving therein a product to be pyrolyzed which is heated by microwave heating.

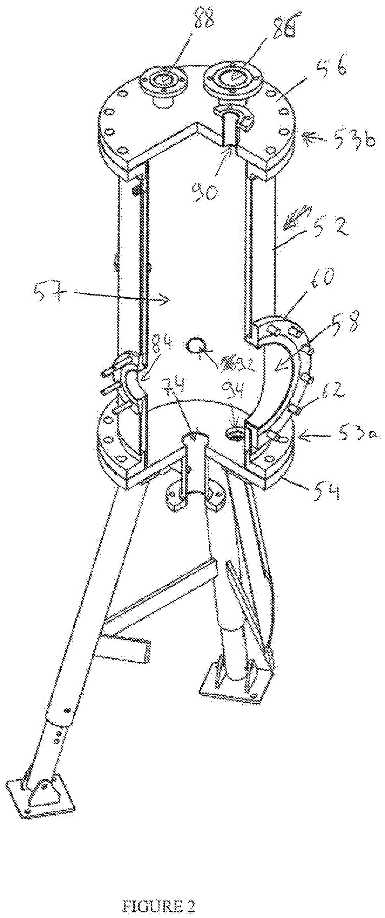

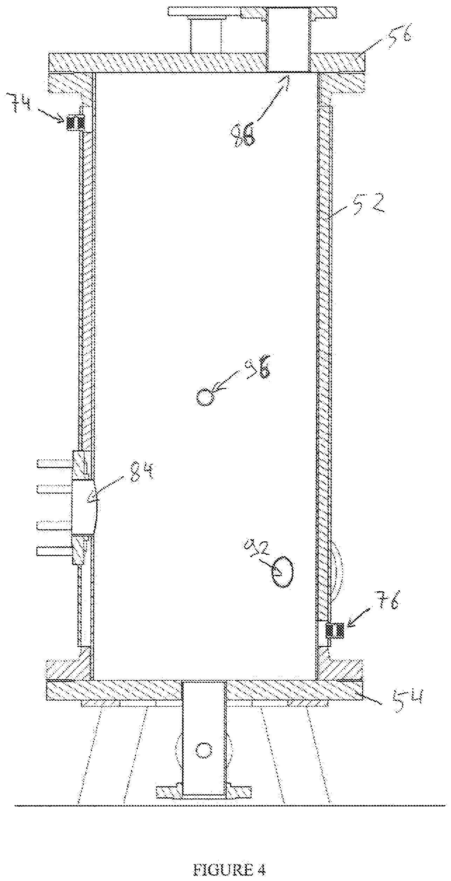

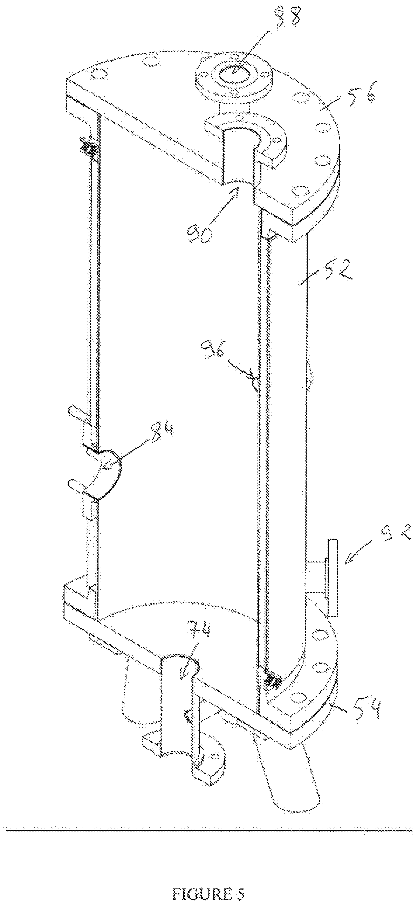

Referring to Figures 2 to 5, there is illustrated one embodiment for the reactor 12. The reactor 12 is configured for performing chemical and/or physical reactions therein under the action of microwave energy.

Some of the embodiments explained below are not part of the invention and are for explanatory purposes only. The scope of the present invention is defined in the appended claims.

In the illustrated embodiment, the reactor 12 comprises a tubular body 52 extending along a longitudinal axis between a first or bottom end 53a and a second or top end 53b, a bottom body or floor 54 and a top body or cover 56. The tubular body 52 defines a cavity 57 in which the product to be pyrolyzed is to be received. The bottom body 54 is removably secured to the bottom end 53a of the tubular body 52 and has a size that is at least equal to the cross-sectional size of the bottom end of the cavity 57 so as to close the bottom end 53a of the tubular body 52. The top body 56 is removably secured to the top end 53b of the tubular body 52 and has a size that is at least equal to the cross-sectional size of the bottom end of the cavity 57 so as to close the top end 53b of the tubular body 52. When the bottom and top bodies 54 and 56 are secured to the tubular body 52, the assembly form an enclosure in which the product to be pyrolyzed is placed. In one embodiment, the connections between the tubular body 52 and the bottom and top bodies 54 and 56 are substantially hermetical so than no fluid may exit the enclosure. For example, gaskets may be positioned between the tubular body 52 and the bottom and top bodies 54 and 56 for ensuring that the enclosure is substantially hermetically closed. In one embodiment, the bottom and top bodies 54 and 56 are fixedly and hermetically secured to the tubular body 52. For example, the bottom and top bodies 54 and 56 and the tubular body 52 may be integral.

The reactor 12 is provided with an aperture 58 through which microwaves are injected into the interior space of the reactor 12, i.e. into the cavity 57. A microwave guiding device operatively connected to the source of microwaves is securable to the external face of the tubular body 52 around the aperture 58 for propagating the microwaves from the source of microwaves into the cavity 57. In the illustrated embodiment, a connection plate 60 projects from the external face of the tubular body 52 around the aperture 58. The connection plate 60 is provided with a plurality of bolts or rods 62 which each protrude outwardly from the connection plate 60. In this case, the microwave guiding device is provided with a connection plate mating the connection plate 60 and provided with holes therethrough, each for receiving a respective bolt 62 therein in order to secure the microwave guiding device to the reactor 12.

In one embodiment, the microwave guiding device is a microwave waveguide. In another embodiment, the microwave guiding device is a coupler such as coupler 14.

In one embodiment, the aperture 58 has a circular shape as illustrated in Figure 2. In another embodiment, the aperture 58 is provided with a rectangular shape such as a square shape. It should be understood that the shape of the aperture 58 is chosen as a function of the microwave guiding device to be secured to the reactor 12 for propagating microwaves therein. While in the illustrated embodiment, the connection plate 60 has an annular shape and the rods 62 are evenly distributed around a circumference of the connection plate 60, it will be understood that other configurations are possible.

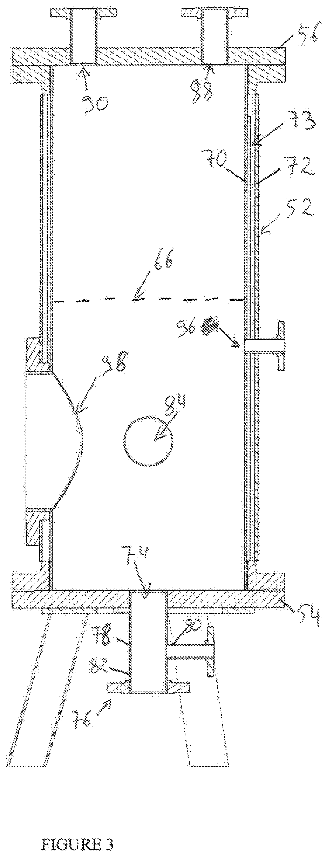

In one embodiment, the aperture 58 is provided on the tubular body 52 adjacent to the bottom end thereof. In one embodiment such as an embodiment in which the reactor 12 is used for pyrolyzing a liquid or slurry product, the reactor 12 is provided with a fill level 66 representing a desired level or a minimal level of product to be inserted within the reactor 12. In this case, the position of the aperture 58 is chosen to be below the fill level 66, as illustrated in Figure 3.

While Figures 1-5 illustrate the aperture 58 provided on the tubular body 52, the person skilled in the art would understand that the aperture for injecting the microwaves into the reactor 12 may be provided at any other adequate position such as on the bottom body 54 or the top body 56.

In one embodiment, at least a section of the tubular body 52 is configured for receiving and propagating a temperature control fluid therein in order to control the temperature of the reactor 12 and/or the product contained within the reactor 12. In the illustrated embodiment, the tubular body 52 comprises an internal tubular wall 70 and an external tubular wall 72, as illustrated in Figure 3. The internal wall 70 is positioned inside the external wall 72 and the internal and external walls 70 and 72 are spaced apart from one another by a gap 73 to form together a double wall structure. The gap 73 then forms an internal cavity which extends circumferentially within the tubular body 52. The gap 73 between the two walls 70 and 72 has a width which is less than the thickness of the tubular body 52 and may be used for propagating the temperature control fluid. In the illustrated embodiment, the external wall 72 is provided with an aperture 74 extending through the external wall 72 and an outlet 76 also extending through the external wall 72. In the illustrated embodiment, the aperture 74 is located adjacent to the top end 53b of the tubular body 52 on a first side thereof and the outlet 76 is located adjacent to the bottom end 53a of the tubular body 52 on a side opposite to the first side. However, the person skilled in the art will understand that this configuration is exemplary only and the positions of the aperture 74 and the outlet 76 may vary and be located at any adequate positions on the reactor 12. The aperture 74 is connected to a source of temperature control fluid (not shown) so that the temperature control fluid is injected through the inlet and exits the tubular body 52 through the outlet 76. The source of fluid is provided with a heating/cooling device for adjusting the temperature of the fluid to a desired temperature. The desired temperature may be chosen so as to heat the reactor 12 before the product to be pyrolyzed be introduced therein, control the temperature of the product during the propagation of the microwaves within the reactor 12, etc.

In one embodiment, the aperture 74 and the outlet 76 are fluidly connected together via a tube (not shown) extending within the gap 73 between the internal and external walls 70 and 72. For example, the tube may extend around substantially the whole circumference of the internal wall 72 and may have a coil or helicoidal shape so to be wrapped around the internal wall 72. In another example, the tube may extend within the internal gap around the circumference of the tubular body 52 according to a serpentine configuration. In one embodiment, the external diameter of the tube is substantially equal to the distance between the internal and external walls 70 and 72 so that the tube is in physical contact with both the internal and external walls 70 and 72. In another embodiment, the diameter of the tube is less than the distance between the internal and external walls 70 and 72. The tube may be made of a flexible material. Alternatively, the tube may be made of a rigid material.

It will be understood that a plurality of tubes may also be used. All tubes are then fluidly connected between a single inlet and a single outlet, or each between a respective inlet and a respective outlet, and each tube extends within the internal cavity formed between the internal and external walls 70 and 72.

While in the illustrated embodiment the tubular body 52 comprises two distinct walls 70 and 72 spaced apart by the gap 73, the tubular body 52 may be formed of a single solid wall and a canal or aperture may extend partially through the thickness of the solid wall between the aperture 74 and the outlet 76 along at least a section of the tubular body 52. The canal is then used for propagating the temperature control fluid in order to adjust the temperature of the reactor 12 to a desired temperature. For example, the canal may have the shape of a serpentine extending along at least a portion of the length of the tubular body 52 and around the circumference of the tubular body 52. In another embodiment, the canal may have a coil or helicoidal shape and extend around the circumference of the tubular body 52. In one embodiment, the tubular body 52 may be provided with a plurality of canals for circulating the temperature control fluid. The canals may each extend between a respective inlet and a respective outlet. In another example, the canals may be fluidly connected together so that a single inlet and a single outlet may be present. For example, the tubular body 52 may be provided with a plurality of canals each extending between a respective inlet and a respective outlet. The canals may have any adequate shape. For example, the canals may have a straight or linear shape. In another example, the canals may have U-shape.

In one embodiment, only a portion of the tubular body 52 is configured for receiving and propagating a temperature control fluid. For example, only the bottom section of the tubular body 52 may be provided with a double wall while the remaining of the tubular body 52 comprises a single solid wall. As a result, the temperature of only the bottom section of the reactor 12 may be controlled via the flow of the temperature control fluid. For example, only the portion of the tubular body 52 located below the fill level 66 may be provided with a double wall structure. Similarly, when the tubular body 52 comprises a solid wall, only a portion of the solid wall may be provided with at least one canal for propagating a temperature control fluid.

In one embodiment, the reactor 12 further comprises at least one temperature sensor for sensing the temperature of the temperature control fluid. In the same or another embodiment, the reactor 12 is provided with at least one flow sensor for sensing the flow of the temperature control fluid. It should be understood that the temperature sensor(s) and/or the flow sensor(s) can be located at any adequate location to measure the temperature and/or the flow rate of the temperature control fluid, respectively, as known in the art.

In one embodiment, the reactor 12 is provided with an aperture for inputting or injecting the product to be pyrolyzed inside the reactor 12. In the illustrated embodiment, the bottom body 54 is provided with an aperture 74 that may be used for injecting the product to be pyrolyzed into the reactor 12.

In one embodiment, the reactor 12 further comprises a T-shaped connector having three fluidly interconnected ports/tubes 78, 80 and 82, as illustrated in Figures 1-5. The first tube 78 is secured to the bottom body 54 around the aperture 74 so as to fluidly connect the reactor 12 to the connector. The tube 80 may be fluidly connected to a source of product to be pyrolyzed in order to inject the product into the reactor 12. The tube 82 may be used as an evacuation drain for evacuating the product contained in the reactor 12 in case of an emergency situation where unloading is necessary or in case of planned discharge of the reactor 12. The inlet/outlet of the tube 82 may be provided with a pressure relief valve in order to prevent overpressure in the reactor 12.

In one embodiment, the reactor 12 is provided with an extraction aperture 84 for extracting reacted product, removing impurities, and/or the like. In the illustrated embodiment, the extraction aperture 84 is located on the tubular body 52 below the fill level 66. The extraction aperture 84 may be useful to control the residence time of the product within the reactor 12 or if non-soluble impurities need to be filtered or removed from the reacted product. The extraction aperture 84 may also be useful to purge a portion of the reactor's content to control concentration of specific impurities for example.

In one embodiment, the reactor 12 is provided with a gas aperture 86 for allowing gases generated during the pyrolysis reaction to be evacuated outside of the reactor 12. In one embodiment, the gas aperture 86 is located on the top body 56. In one embodiment, the gas aperture 86 is fluidly connected to a condenser for condensing the gas coming from the reactor 12. In one embodiment, a gas/liquid separator is inserted at the gas aperture 86 for preventing entrainment of liquid from the reactor 12 in the condenser system in order to avoid blockage or fouling of the condenser tubes for example.

In an embodiment in which the system comprises a condenser, the condensed gas phase can be partially or completely recycled back in the reactor 12 to increase the residence time of the reacted product in the reactor 12 via the tube 82 for example.

In an embodiment in which microwave absorbing particles are to be used (as described below), the reactor 12 is provided with an aperture 88 for inserting the microwave absorbing particles inside the reactor 12. In one embodiment, the aperture 88 is located on the top body 56.

In one embodiment, the reactor 12 is provided with a pressure relief aperture 90 for protecting the reactor 12 from overpressure. A pressure relief valve may be connected to the aperture 90 for allowing gas to exit the reactor 12 when the pressure is greater than a predefined pressure.

In one embodiment, the reactor 12 comprises at least one aperture for allowing the insertion of at least one sensor into the reactor 12. In the illustrated embodiment, the reactor 12 is provided with a pressure aperture 92 for inserting a pressure sensor in the reactor 12 and two temperature apertures 94 and 96 each for inserting a respective temperature sensor into the reactor 12. In the illustrated embodiment, the temperature aperture 94 may be used for the sensing the temperature at the bottom of the reactor 12 adjacent to the bottom body 54 while the temperature aperture 96 may be used for measuring the temperature below and adjacent to the level line 66.

In the illustrated embodiment, a connector is associated with each aperture 86, 88, 90, 92, 94 and 96. Each connector comprises a tube projecting from the external surface of the reactor 12. Each tube extends between a first end secured around the respective aperture, and a second end. A flange extending around the second end of each tube is provided with a plurality of holes for allowing the securing of another tube. The tubes may be secured together using bolts and nuts for example.

In one embodiment, the bottom and top bodies 54 and 56 are removably secured to the tubular body 52. In this case, it should be understood that any adequate method/system for removably securing the bottom and top bodies 54 and 56 to the tubular body 52 may be used. In the illustrated embodiment, the tubular body 52 is provided with a bottom flange which projects radially and outwardly around the bottom end of the tubular body 52 and a top flange which projects radially and outwardly around the top end of the tubular body 52. Both flanges are each provided with a plurality of holes which extend through a thickness thereof. The bottom and top bodies 54 and 56 are each provided with holes positioned adjacent to an outward end along the circumference thereof. Bolts and nuts may then be used for securing the bottom body 54 to the bottom flange, and the top body 56 to the top flange.

In one embodiment, the bottom and top bodies 54 and 56 are hermetically and removably securable to the tubular body 52. In this case, at least one gasket may be inserted between the bottom body 54 and the bottom flange and between the top body 56 and the top flange.

In another embodiment, the bottom and/or top bodies 54 and/or 56 is(are) fixedly secured to the tubular body 52. For example, the bottom body 54 may be welded to the tubular body 52 while the top body 56 may be removably secured to the tubular body 52.

In one embodiment, the location of at least some of the apertures 74, 84, 86, 88, 90, 92, 94 and 96 may vary from the location illustrated in Figures 1-5. Some of the apertures may be located on the tubular body 52 while other apertures may be locates on the top body 56 or the bottom body 54.

In one embodiment, the reactor 12 is further provided with an agitator device for agitating/mixing the product contained therein during the reaction. For example, a mechanical agitator may be secured to the top face of the bottom body 54. It will be understood that any adequate agitator device may be used and that the reactor 12 (such as the bottom body 54) may comprise an aperture through which a part of the agitator device such a shaft may extend.

In another example, gas such as inert gas may be injected via an aperture through the reactor 12 in the slurry phase material during the reaction to generate bubbles and thereby mix/agitate the slurry phase material.

The above-described reactor 12 may be used for pyrolyzing a gas product, a liquid product or a solid product. In the following, the operation of the reactor 12 is described for the pyrolysis of a liquid product.

The product to be pyrolyzed is injected into the reactor 12, for example via the port 80 of the connector and the aperture 74 present in the bottom body 54. The volume of product injected into the reactor 12 is chosen so that the top surface of the product once in the reactor 62 be substantially aligned or coplanar with the level line 66 to ensure that the whole surface of the aperture 58 be covered with the product.

Microwaves are then injected into the reactor 12 via the aperture 58. The liquid product then interacts with the microwave electrical field to convert the product such as a liquid product into a slurry phase. In one embodiment, the interaction of the product with the microwaves is direct so that the product is directly heated by the microwaves. In another embodiment, the heating of the product is indirect. In this case, microwave absorbing particles are introduced into the reactor 12 and mixed with the product. The microwave absorbing particles are then used for converting the microwaves into heat and the product is heated by convection/conduction to create the slurry phase.

In one embodiment, the reactor 12 may be purged prior to the propagation of the microwaves into the reactor 12 to remove traces of oxygen if the reaction requires anaerobic conditions. In this case, gas such as nitrogen or any adequate purge gas may be introduced into the reactor 12.

In one embodiment, liquid product is continuously introduced into the reactor 12 while microwaves are propagated therein. In this case, the feed rate of the liquid product into the reactor 12 is chosen so that the fill level 66 of liquid product in the reactor 12 be maintained to ensure that the aperture 58 be covered with the slurry phase and isothermal conditions be present on the coupler interface.

During the reaction, i.e. during the propagation of the microwaves within the reactor 12, some of the slurry phase may be continuously extracted from the reactor 12 through the aperture 84 to remove impurities or extract partially reacted product The extraction of slurry phase material may be useful when the residence time of the slurry phase material within the reactor 12 needs to be controlled, when non-soluble impurities need to be filtered or removed from the slurry phase, when the concentration of specific impurities need to be controlled, and/or the like.

In one embodiment, the temperature of the product contained within the reactor 12 is controlled by controlling the temperature of the reactor 12 such as by injecting a temperature control fluid into the double wall of the tubular body 52 via the aperture 74. The temperature of the slurry phase material contained in the reactor 12 can be adjusted to a desired temperature such as a temperature ensuing isothermal conditions in the reactor 12 by adequately adjusting the temperature and/or flow of the temperature control fluid injected into the double wall of the tubular body 52. It should be understood that the temperature of the slurry phase material may be determined using the temperature sensors inserted into the apertures 94 and 96 of the reactor 12. In one embodiment, the temperature control is used for maintaining a temperature gradient between the reaction sites and the slurry phase material and favoring a given reaction over others.

In one embodiment, the reactor 12 may be pre-heated to a desired temperature before the injection of the liquid material within the reactor 12.

In one embodiment, the reactor 12 may operate under atmospheric pressure, at pressure greater than the atmospheric pressure or at vacuum conditions to favor certain reactions selectivity if desired or required.

In one embodiment, the reactor 12 is made of stainless steel. In one embodiment, the reactor 12 is made of a material having a low dielectric loss and a high electrical conductivity to prevent heat loss in the reactor's vessel which may reduce the energy efficiency transferred to the reaction.

In an embodiment in which the product to be pyrolyzed is liquid and while the microwaves propagate within the reactor 12, some reactions occur in the slurry phase that cracks the slurry phase molecules to smaller molecules and may also generate gaseous products depending on the reactor's conditions. This gas generation produces bubbles through the slurry phase and promotes mixing of the slurry phase. The cracking reactions also reduce the slurry phase viscosity, which further facilitates mixing of the slurry phase. The thus-obtained mixing of the slurry phase maintains suspension of the microwave absorbing particles in the slurry phase and the best resistive conditions in the reactor 12 to maximize the microwave absorption. The mixing of the slurry phase also promotes a homogeneous slurry phase and the mass transfer to the reaction sites.

The reaction usually occurs on the surface of the microwave absorbing particles, unless the slurry phase is also absorbing partially or totally the microwave energy. The microwave absorbing particles may be composed of chemically inert carbonaceous material or chemically active catalytic material to enhance and favor predefined and desired reactions under the action of microwaves. The surface of the particle is normally at a higher temperature than that of the slurry phase and therefore the products generated during the reaction are produced at a higher temperature than that of the slurry phase. When the gas containing the reaction products is bubbling through the slurry phase, some heat is released into the slurry phase and the generated gas is cooled down rapidly to a temperature being not lower than the temperature of the slurry phase. This rapid cooling down of the gas stops side reactions that may be undesirable and therefore favors higher selectivity towards desired products.

In one embodiment, the internal diameter d of the reactor 12 is equal to or greater than the wavelength of the microwaves injected into the reactor 12. For microwaves having a frequency f, the internal diameter d of the reactor 12 is equal to or greater than c/f where c is the speed of light. Typically, for standard 915MHz microwaves, the internal diameter of the reactor 12 is equal to or greater than 0.32m.

In one embodiment, the reactor 12 contains a mass of microwave absorbing particles $m_p$ with high dielectric loss that will convert the microwave electrical field into heat. These particles are free moving in the slurry phase under the action of bubbles formed by the generation of gas during the reaction or by forced convection provided by a recirculating pump for example.

The microwave absorbing particles are free-flowing in the slurry phase under natural or forced convection, which allows a better distribution of absorbing particles inside the reactor 12 which increases the overall resistive nature of the reactor's impedance. The increase of the overall resistive nature of the reactor's impedance in return makes easier the tuning of the resonant system comprising the microwave source and the reactor 12. For example, if the particles were not flowing freely, it would become more difficult to tune the system and therefore the reactor's energy performance would decrease as a result of an impedance mismatch which would cause the transmitted energy to the reactor to decrease. Furthermore, tuning a high mismatch also increases the resistive losses on the tuner, which results in lost energy (heat).

In one embodiment, the microwave absorbing particles are added in the reactor 12 before the injection of the microwaves in the reactor 12. If some microwave absorbing particles are lost during the operation of the reactor 12 as a result of attrition, entrainment or purge, additional microwave absorbing particles may be added during the reaction if needed.

In one embodiment, desired reactions and therefore desired end result chemicals can be achieved by controlling the temperature gradient or difference between the microwave absorbing particles and the slurry phase, as described in the following. Since the slurry phase has a low thermal conductivity $k_b$, the absorbing particles are partially thermally insulated from the rest of the reactor. Under continuous microwave power flux (P) which provides a continuous flux of heat to the microwave absorbing particles and since the microwave absorbing particles are partially insulated from the slurry phase, the temperature $T_p$ of the microwave absorbing particles may rise and a temperature gradient or difference $\Delta T$ is created between the microwave absorbing particles and the slurry bulk: $\Delta T = T_P - T_b$, where $T_b$ is the temperature of the slurry bulk. In one embodiment, the magnitude of the temperature gradient $\Delta T$ is used to achieve high selectivity of key chemicals:

- the controlled reaction temperatures on the particle surface promote desired reactions to produce the desired key chemicals; and

- a lower slurry bulk temperature $T_b$ quenches further reactions to avoid decomposition of the desired key chemicals.

The temperature gradient $\Delta T$ can be adjusted to a desired value by adjusting various parameters on the reactor 12.

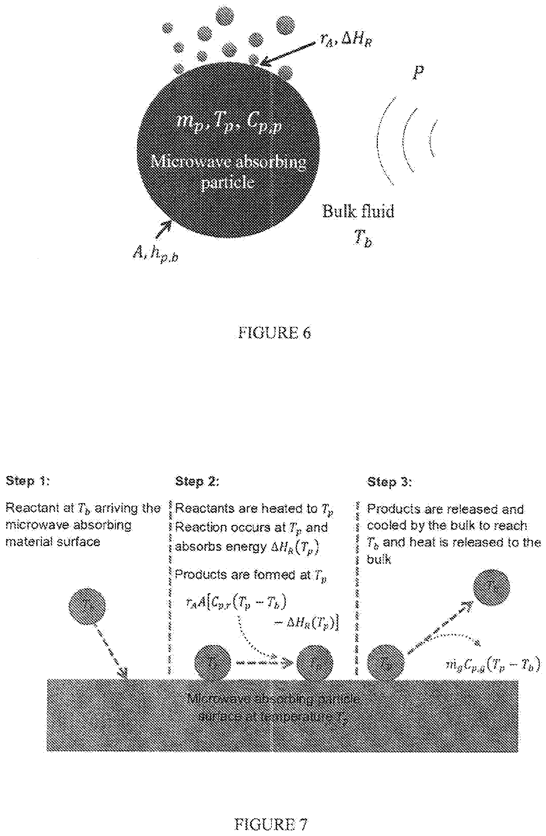

To explain how the reactor controls this gradient, an energy balance on the microwave absorbing particle may be performed as follows in reference with Figure 6:

$$m_p C_{p,p} \frac{dT_p}{dt} = P - r_A A(\Delta H_R) - h_{p,b} A \underbrace{(T_p - T_b)}_{\Delta T} - \sigma \epsilon A(T_p^4 - T_b^4)$$

$$(\text{Eq. 1})$$

where $m_p$ is the mass of particles (kg), $C_{p,p}$ is the specific heat of the microwave absorbing particles (J/kg-K), P is the microwave power (W), A is the total surface area (m$^2$) of the absorbing particles (A = $m_p \times$ a) and a (m$^2$/kg) is the specific surface area of the particle, $r_A(T_p, Re_b)$ is the reaction rate occurring at the surface of the particle (kg/m$^2$-s), which is a function of the particle temperature ($T_p$) and the boundary layer on the particle surface which is function of the bed Reynolds number ($Re_b$). $\Delta H_R(T_p)$ is the heat of reaction (J/kg) at the particle surface temperature $T_p$, $h_{p,b}$ is the convection heat transfer coefficient between the microwave absorbing particle and the bulk (W/m$^2$-K), $\sigma$ is the Boltzmann constant

and $\varepsilon$ is the emissivity of the microwave absorbing particles. In most cases, the slurry bulk has a low emissivity and therefore, the radiative portion of the heat transfer may be neglected.

The heat transfer coefficient $h_{p,b}$ is a function of the Nusselt number (Nu) in the slurry phase. A dimensionless number is defined by $Nu_b = \frac{h_{p,b}d}{k_b}$ where d and $k_b$ are the characteristic dimension and the thermal conductivity of the bulk, respectively. In one embodiment such as under normal circumstances, the Nusselt number varies as a function of hydrodynamic regimes captured by the Reynolds number (Re) in the slurry phase: $Re_b = \frac{\rho_b vd}{\mu_b}$ with $\rho_b$, v d and $\mu_b$ are the density, the characteristic velocity, the characteristic dimension and the dynamic viscosity of the slurry phase, respectively. Therefore, the heat transfer coefficient is a function of the Reynolds number Re and the dimensionless number Nu in the slurry bulk. As a result: $h_{p,b} = h_{p,b} (Nu_b, Re_b)$.

In order to keep the reactor 12 in a steady state regime, the microwave absorbing particle temperature should be stable, i.e. $\frac{dT_p}{dt} = 0$ . Equation 1 can then be rewritten as follows:

$$P - r_A(T_p, Re_b)\, m_p\, a\, \Delta H_R(T_p) - h_{p,b}(Nu_b, Re_b)\, m_p\, a\, \Delta T = 0 \quad (Eq.\ 2)$$

The temperature gradient $\Delta T$ between the microwave absorbing particle and the slurry bulk is then given by:

$$\Delta T = \frac{P - r_A m_p a \Delta H_R(T_p)}{h_{p,b}(Nu_b, Re_b) m_p a} \quad (Eq.\ 3)$$

From Equation 3, the person skilled in the art will understand that the temperature gradient $\Delta T$ between the surface of the particle and the slurry phase can be adjusted to a desired value by adjusting at least one of the following parameters:

- the mass of absorbing particles ($m_p$) since reducing the mass of absorbing particles will increase the temperature gradient $\Delta T$;

- the specific surface area of the particle (a) since reducing the specific surface area of the particle will increase the temperature gradient $\Delta T$;

- the hydrodynamic regime inside the reactor by forcing recirculation with a pump or a bubbling gas ($h_{p,b}(Nu_b, Re_b)m_p$) since reducing the heat transfer coefficient between the particle and the slurry phase will increase the temperature gradient $\Delta T$; and

- the microwave power P delivered to the reactor 12 since increasing the delivered microwave power will increase the temperature gradient $\Delta T$.

From Equation 2, the person skilled in the art will also understand that it may be possible to change the overall reaction rate by changing the ratio of microwave power to the net surface area of microwave absorbing particles.

When the reaction is very fast and when the surrounding fluid has very low thermal conductivity, we have $r_A m_p a \Delta H_R(T_p) \gg h_{p,b}(Nu_b, Re_b)m_p a \Delta T$. Therefore the reaction is dominant and the thermal loss with the surrounding bulk can be neglected. As a result, it can be assumed that all of the microwave energy is consumed by the reaction and Equation 2 can be rewritten as follows:

$$P - r_A m_p a \Delta H_R(T_p) = 0 \quad (Eq.\ 4)$$

The reaction rate $r_A$ can then be written as:

$$\frac{P}{m_p a}\left(\frac{1}{\Delta H_R(T_p)}\right) = r_A \quad (Eq.\ 5)$$

Therefore, increasing the ratio $\frac{P}{m_p a}$ increases the rate of reaction $r_A$ (kg/m2-s).

An alternative way of reaching the same conclusion is by starting from the reaction rate $r_A(T_p, Re_b)$, which follows an Arrhenius expression:

$$r_A = A(T_p, Re_b) \exp\left(\frac{-E_A}{R\,T_p}\right) f(C_i) \quad \text{(Eq. 6)}$$

where $A(T_p, Re_b)$ is a specific rate constant which is function of the particle temperature and Reynolds number in the slurry bulk and $f(C_i)$ is a kinetic model which is function of the concentration of species $i$. With all other operating parameters being kept constant, increasing the microwave power P or decreasing the net area of the particles ( $m_p$ a) results in an increase of the particle temperature $T_p$:

$$\frac{P}{m_p\,a} = A(T_p, Re_b) \exp\left(\frac{-E_A}{R\,T_p}\right) \Delta H_R(T_p) f(C_i) + h_{p,b}(Nu_b, Re_b)\,\Delta T \quad \text{(Eq. 7)}$$

Since the reaction rate $r_A$ varies exponentially with the particle temperature $T_p$, a variation in $\dfrac{P}{m_p\,a}$ will affect particle temperature, which will also affect the reaction rate $r_A$.

In an embodiment in which a temperature control fluid is used for adjusting the temperature of the reactor 12, the temperature gradient $\Delta T$ can be controlled via the temperature control fluid.

The reactor 12 is also able to provide very short residence time at the particle temperature by allowing the reaction product to bubble through the bulk slurry phase around the particles after it leaves the surface of the microwave absorbing particle, as illustrated in Figure 7. In a first step, a reactant particle having the temperature $T_b$ of the slurry bulk arrives at the surface of a microwave absorbing particle having a temperature $T_P$ which is greater than the temperature of the reactant particle. At step 2, the temperature of the reactant particle increases up to the temperature of the microwave absorbing particle $T_P$ and a reaction occurs to generate a reaction product. At step 3, the reaction product is released and its temperature cools down to reach the slurry bulk temperature $T_b$.

Considering that the microwave absorbing particles are at higher temperature than the bulk slurry phase, specific chemical reactions are promoted and occur at faster rates on the surface of the microwave absorbing particles. The reaction products are in a gas phase and escape the particle surface in gas bubbles. Once the product-containing bubbles leave the surface of the hot microwave absorbing particles, the reaction particles immediately cool down by releasing their heat to the slurry phase. The heat transferred to the slurry phase can be expressed as follows (assuming no phase change in the gas):

$$m_b C_{p,b} \frac{dT_b}{dt} = \dot{m}_g C_{p,g}(T_p - T_g) - \dot{q}_J \quad \text{(Eq. 8)}$$

where $m_b$ is the mass of the bulk slurry phase, $C_{p,b}$ is the specific heat capacity of the bulk phase (J/kg-K), $T_b$ is the temperature of the bulk slurry phase, $\dot{m}_g$ is the rate of production of gas (kg/s), $C_{p,g}$ is the specific heat capacity of the gas phase (J/kg-K), $T_g$ is the temperature of the gas at the outlet of the reactor and $\dot{q}_J$ is the heat removal by the jacket. In one embodiment, $T_g$ is to be minimized and therefore the desired target is $T_g = T_b$.

The above equation is obtained by neglecting the conductive heat transfer between the microwave absorbing particle and the bed, i.e. the surrounding slurry phase as well as the radiative and convective heat loss between the slurry bulk and the reactor 12. It is assumed that most energy transfer is due to the gas release.

In one embodiment, the objective is to maintain the steady state condition in the bulk slurry phase in the reactor 12, i.e. $\dfrac{dT_b}{dt} = 0$ , in order to maintain the desired temperature gradient between the slurry bulk and the surface of the microwave absorbing particles. In order to achieve this objective, heat has to be removed from the reactor according to the following equation:

$$\dot{q}_J = \dot{m}_g C_{p,g}(T_p - T_g) \quad \text{(Eq. 9)}$$

If no heat is removed from the reactor 12, the following condition occurs:

$$m_b C_{p,b} \frac{dT_b}{dt} = \dot{m}_g C_{p,g}(T_p - T_g) = 0 \quad \text{(Eq. 10)}$$

Equation 10 implies that $T_p = T_g$. Since $T_g = T_b$ for the best case, this implies that without removing heat from the reactor 12, we obtain $T_p = T_b$ and therefore the gradient between the slurry bulk and the microwave absorbing particles vanishes.

It is therefore required to remove heat from the reactor 12 to maintain the temperature gradient between the particle and the slurry phase to the desired value.

In one embodiment, temperature control fluid may be circulated within the wall of the tubular body 52, as described above.

In the same or another embodiment, water having an adequate temperature or recycled and cooled liquid products generated by the reactor 12 can be injected into the reactor 12 in order to absorb additional energy from the reactor 12 and thereby maintain the temperature gradient.

As described above, temperature control fluid may be circulated within the wall of the tubular body 52 in order to pre-heat the reactor 12 prior and/or during the start-up of the reactor 12. In this case, the temperature control fluid may pre-heat the wall of the tubular body 52 at the reaction temperature to prevent slurry phase to solidify when fed into the reactor 12. For example, if the slurry phase is composed of molten plastic with a melting temperature around 225°C, the reactor 12 may be pre-heated at a temperature above the 225°C.

In one embodiment, the cooling of the wall of the tubular body 52 of the reactor 12 ensures that no hot spot will be created in the reactor 12 and cause mechanical stress on the reactor's components. Since microwave heating can concentrate high amount of energy, it may be important to ensure that hot spots have a limited impact on the reactor integrity.

In an embodiment in which the reactor 12 comprises the gas aperture 86 for allowing gas to exit the reactor 12, a gas flow sensor may be operatively connected to the gas aperture 86 to track the rate of production of gas ($\dot{m}_g$) which is a direct measure of the reaction rate. The gas flow rate may be any adequate device configured for measuring the flow rate of a gas such as a pitot tube or a Venturi gas flow meter.

In an embodiment in a temperature control fluid is circulated within the wall of the reactor 12, at least one temperature sensor and at least one flow sensor may be used for determining the heat flux captured by the temperature control fluid during the reaction ($\dot{q}_J$). Using the heat balance presented above, this temperature control fluid may allow for controlling the temperature of the microwave absorbing particles to ensure optimum reaction conditions. The temperature of the microwave absorbing particles can be determined using the heat flux measurement ($\dot{q}_J$) and the gas flow rate ($\dot{m}_g$) according to the following equation:

$$T_p = \left(\frac{1}{\dot{m}_g}\right)\frac{q_J}{c_{p,g}} + T_b \quad \text{(Eq. 11)}$$

In an embodiment in which the reactor 12 is provided with an aperture 58 connected to the microwave coupler 14, backflow of the slurry in the waveguide/coupler using an interface sealed by a high temperature seal may be prevented. In one embodiment, the diameter d of the aperture 58 satisfies the following equation: $d \geq c/f$ where c is the speed of light and f the frequency of the microwaves. Typically for standard 915MHz microwaves, the diameter of the reactor is $d \geq 0.32m$. In one embodiment, the circular shape of the aperture 58 allows for better sealing with a circular seal, which would be more complicated if the aperture 58 would have a non-circular shape. The circular shape of the interface also allows for a reduction of the surface electrical field to reach values below the electrical breakdown of the material touching the interface. For example, rectangular shapes may yield higher electrical field values on the interface and cause arcing and/or plasmas, and may ultimately yield to thermal shock on the interface followed by breakdown.

In one embodiment, the aperture 58 penetrates inside the reactor 12 and leaves a certain zone 98 in front of the interface that is designed to prevent accumulation of solids. This aperture 58 is then immerged inside the slurry phase below the fill level 66 to ensure isothermal conditions on the surface of the microwave coupler interface. In one embodiment, an immerged aperture 58 positioned below the fill level 66 is preferred to an inlet located above the slurry phase as it avoids bubbles from entraining microwave absorbing particles onto the interface of the coupler and therefore prevents thermal shocks. When the coupler interface is above the slurry phase in the gas phase zone and bubbles of liquid entraining absorbing particles hit the surface of the interface of the coupler, the microwave absorbing particles may absorb more heat by being closer to the microwave source and the entrained liquid may decompose following the normal reaction path, but upon exhaustion of the liquid entrained with the bubbles, the microwave absorbing particles may rise suddenly in temperature because no more reacting material surrounds them. This may create a thermal shock for the microwave coupler interface and cause systematic failures of the interface.

In one embodiment, submerging the interface of the coupler below the fill level 66 in the reacting slurry phase may ensure that when the microwave absorbing particles hit the coupler's interface, the microwave absorbing particles are substantially always surrounded by reacting material and therefore the temperature of the microwave absorbing particles hitting the coupler's interface will not rise suddenly and cause thermal shocks on the interface.

In one embodiment, the angle of the aperture 58 is chosen so as to avoid accumulation of microwave absorbing particles and gas bubbles onto the surface of the coupler interface. The aperture 58 may be orthogonal to tubular body 52 so that the coupler interface surface is parallel to the tubular body 52, which minimizes the risk of particle and bubble accumulation.

In one embodiment, the closer the interface is from the slurry phase, the easier is the tuning of the system. Furthermore, since high microwave energy density can lead to arcing, having the interface closer to the slurry minimizes the high energy density zone. Therefore it may be important to minimize the coupler intrusion zone 98. In some embodiments, the coupler intrusion zone 98 is designed to prevent accumulation of solids in front of the interface of the coupler. For example, a chamfer of 45° around the interface inlet may be enough to prevent accumulation of solids around the interface of the coupler.

In one embodiment, the coupler can be flush with the reactor inner wall in the coupler intrusion zone 98 in order to eliminate surfaces where microwave absorbing particles and gas bubbles may accumulate and create hot spots.

In one embodiment, the reaction may produce solid by-products that are not devolatilized. In addition, the feed composition may cause accumulation of material which may build-up in the reactor. Therefore, to prevent accumulation of non-soluble solids in the reactor, a filtration or centrifugation system may recirculate the slurry to remove solid particulates. The slurry extraction port 84 on the reactor 12 contains a screen that prevents the microwave absorbing particles in suspension in the slurry phase from being extracted and removed by the filter. It should be understood that the screen mesh size should be smaller than the size of the microwave absorbing particles in suspension in the bulk. In one embodiment, the reactor diameter may be at most equal to about 18 inches and the diameter of the gas aperture 86 may be limited to about 3 inches to promote solid by-product particle entrainment with the gas out of the reactor 12.

In one embodiment, the reaction may create by-products soluble in the slurry phase. In addition, the feed composition may include material that are soluble in the slurry phase and do not devolatilize during the chemical reaction which may build-up in the reactor 12. In order to prevent accumulation of soluble components in the reactor, a purge stream can draw a constant flow of slurry phase to control the level of soluble contaminants in the reactor. This purge line may also be used to empty the reactor 12 when desired. It may also be used to control residence time of the slurry phase if a specific residence time is needed.

In an embodiment in which the fill level of slurry phase is to be maintained in the reactor 12, the level of the slurry phase, i.e. the position of the top surface of the slurry phase, may be determined by measuring the differential pressure between the top portion of the reactor 12 and the bottom portion of the reactor 12.

In one embodiment, the gases produced by the reaction are cooled down in a stage condensation system to perform a selective condensation of less volatile fractions in a first stage of the condensation system and a further condensation of more volatile fractions in a second stage of the condensation system. It should be understood that the number of stages in the condensation system may vary. In one embodiment, the selective fractions can be recycled into the reactor 12 to provide longer residence time or multiple passes in the reactor 12 and increase overall yields of the desired products.

In one embodiment, the reactor comprises a partial reflux system which may be installed on top of the reactor 12 to reflux back the heavier fractions in the gases more easily in the reactor.

In one embodiment, the reactor 12 is equipped with various nitrogen purge to remove air entrapped in the reactor before starting and in the coupler to prevent accumulation of flammable gases in the waveguide.

In one embodiment, the reactor 12 is equipped with an overpressure protection system. In one embodiment, the reactor is rated for 100 psig at operating temperature to allow the use of smaller venting devices.

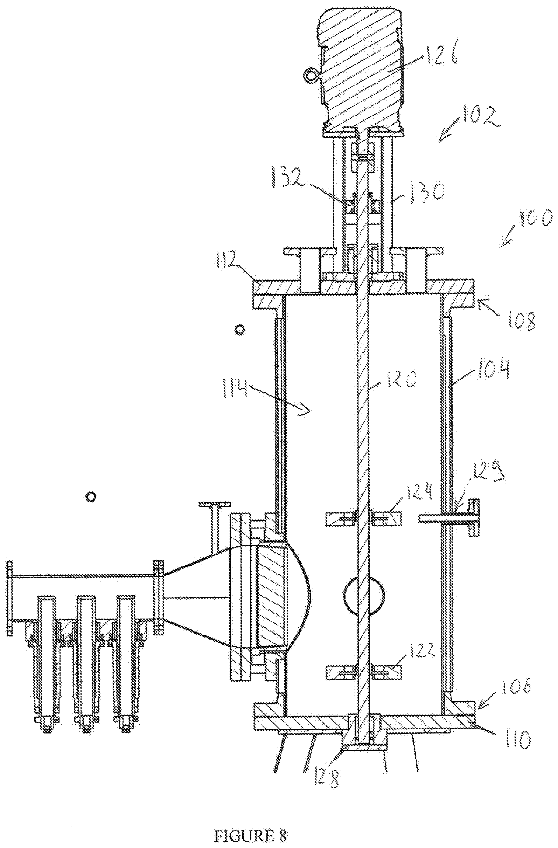

As described above, the reactor 12 may be provided with an agitator device. Figure 8 illustrates one embodiment of a reactor 100 provided with a mechanical agitator device 102. The reactor 100 is configured for performing chemical and/or physical reactions therein under the action of microwave energy and its structure and architecture is similar to those of reactor 12.

The reactor 100 comprises a tubular body 104 extending along a longitudinal axis between a first or bottom end 106 and a second or top end 108, a bottom body or floor 110 and a top body or cover 112. The tubular body 104 defines a cavity 114 in which the product to be pyrolyzed is to be received. The bottom body 110 is secured to the bottom end 106 of the tubular body 104 and has a size that is at least equal to the cross-sectional size of the bottom end of the cavity 114 so as to close the bottom end 106 of the tubular body 104. The top body 112 is secured to the top end 108 of the tubular body 104 and has a size that is at least equal to the cross-sectional size of the top end of the cavity 114 so as to close the top end 108 of the tubular body 104. When the bottom and top bodies 110 and 112 are secured to the tubular body 104, the assembly form an enclosure in which the product to be pyrolyzed is placed.

The agitator device 102 comprises a shaft 120, a first pair of blades 122, a second pair of blades 124 and a motor 126. The first and second pairs of blades 122 and 124 are secured to the shaft at different positions along the length thereof. The shaft 120 extends longitudinally through reactor 100 and the motor 126 is mounted on the top of the top body 112 of the reactor 100. The bottom end of the shaft 122 is rotatably secured to the bottom body 110 and the top end of the shaft 120 is operatively connected to the motor 126 so that an actuation of the motor 126 triggers a rotation of the shaft 120 about its longitudinal axis. The rotation of the shaft 120 triggers a rotation of the blades 122 and 124 in order to agitate the slurry phase present into the reactor 100.

In the illustrated embodiment, the bottom body 110 and the top body 112 are each provided with a respective shaft receiving aperture. The bottom end of the shaft 120 extends though the shaft receiving aperture of the bottom body 110 and is rotatably secured to the bottom body 110 via a securing body 128. The top portion of the shaft 120 extends through the shaft receiving aperture present in the top body 112 and the top end of the shaft 120 is operatively secured to the motor 126. It should be understood that at least one first seal may be positioned within each shaft receiving aperture of the bottom and top bodies 110 and 112 to sealingly connect the shaft 120 to the bottom and top bodies 110 and 112 so that the cavity 114 be hermetically closed and no fluid may exit the reactor 100 via the shaft receiving apertures of the bottom and top bodies 110 and 112.

In one embodiment, the position of the first pair of blades 122 along the length of the shaft 120 is chosen so that when the shaft 120 is secured to the reactor 100 the blades 122 are in physical contact with the slurry phase present in the reactor 100. Similarly, the position of the second pair of blades 124 along the length of the shaft 120 is also chosen so that the blades 124 are in physical contact with the slurry phase present in the reactor 100. In an embodiment, the reactor 100 is provided with a fill level representing a desired level of product or a minimal level of product within the reactor 100. In this case, the position of the first and second blades 122 and 124 along the length of the shaft 120 may be chosen so that the first and second blades be located below the fill level, i.e. between the fill level and the bottom body 110.

While for the reactor 12 the aperture 74 for injecting material to be pyrolyzed into the reactor 12 is located on the bottom body 54, the reactor 100 comprises an inlet 129 located on the wall of the tubular body 104 for injecting material into the reactor 100. In an embodiment in which the reactor 100 is provided with a fill level, the position of the inlet 129 may be chosen to be below the fill level.

It should be understood that the agitator device 102 may comprise additional components. For example and as illustrated in Figure 8, the agitator device 102 may comprise a tubular body 130 secured to the top face of the top body 112 around the shaft receiving aperture and extending away from the top body 112. The motor 126 is secured to the top end of the tubular body 130. The shaft 120 extends inside the cavity defined by the tubular body 130 so that its top end be connected to the motor 126. For example, the agitator device 102 may further comprise at least one bearing 132 positioned within the tubular body 130 for receiving the shaft therein.

It should be understood that the number, shape and position along the length of the shaft 120 for the blades 122 and 124 may vary. For example, the blades 122 or the blades 124 may be omitted. In another example, the agitator device 102 may comprise a single blade secured to the shaft 120.

In the following there is described a method 150 for pyrolyzing a product. The method may be performed using any adequate pyrolyzing reactor such a microwave pyrolysis reactor. However, it should be understood that the method 150 is not limited to be used with a microwave pyrolysis reactor.

At step 152, the pyrolysis of a product is started, thereby obtaining a partially pyrolyzed product. The product is introduced into a pyrolysis reactor and heated to start a pyrolysis process. For example, the product to be pyrolyzed is introduced into a microwave pyrolysis reactor such as reactor 12 or 100 and microwaves are generated and coupled into the microwave pyrolysis reactor to start the pyrolysis process.

At step 154, part of the partially pyrolyzed product is extracted from the reactor. At step 156, the extracted partially pyrolyzed product is mixed with additional product to be pyrolyzed, thereby obtaining a mixed product. For example, the extracted product and the additional product to be pyrolyzed may be injected into a mixing tank. The mixed product is then pyrolyzed at step 158 to obtain a final product. The mixed product is injected into the pyrolysis reactor to be pyrolyzed by heating.

In one embodiment, the method 150 further comprises heating the mixture of partially pyrolyzed product and product to be pyrolyzed to a desired temperature during the mixing step 156. The desired heating temperature may be chosen as a function of a desired viscosity for the mixed product.

In one embodiment, the pyrolysis method 100 uses microwaves to perform the pyrolysis process and the product to be pyrolyzed comprises a polymer. The method 100 then allows for improving the performance of the microwave pyrolysis process.

In one embodiment, the method 150 further comprises a step of filtering the extracted partially pyrolyzed product after the extraction step 154 and before the mixing step 156 in order to remove contaminants for example.

Existing polymer dissolution systems use a solvent to selectively dissolve a polymer. The liquid solution is filtered to remove undissolved matter (e.g. contaminants). The filtrate is recovered and the solvent is stripped to precipitate the polymer that is recovered. The solvent can dissolve some contaminants that can precipitate with the polymer. These contaminants need to be removed by some other method from the polymer. Alternatively the contaminants may be kept with the polymer but this affects the end use of the recovered polymer. For example, it may prevent the recovered polymer from being used for food grade applications.

During the solvent stripping step, contaminants can also be stripped and mixed with the recovered solvent. The solvent then requires to be purified using a distillation column for example.

When using a microwave pyrolysis reactor without the mixing step 156 of method 100, polymer is injected into the microwave pyrolysis reactor to undergo depolymerisation. The high viscosity of the injected polymer may lead to zones of high viscosity and high viscosity gradients in the slurry phase reactor. The high viscosity may result in mass and heat transfer limitations that lead to hot spots and thermal shock at the microwave coupler. Thermal shocks may lead to failure of the microwave coupler. The use of method 150 in which preconditioning the polymer by solubilizing the polymer in a solvent resulting from the pyrolysis process reduces the viscosity of the injected polymer thereby minimizing the risk of hot spots in the slurry phase present in the reactor and improving the quality of the end product. Furthermore, the lower viscosity allows the use of cheaper equipment for slurry injection and filtration.

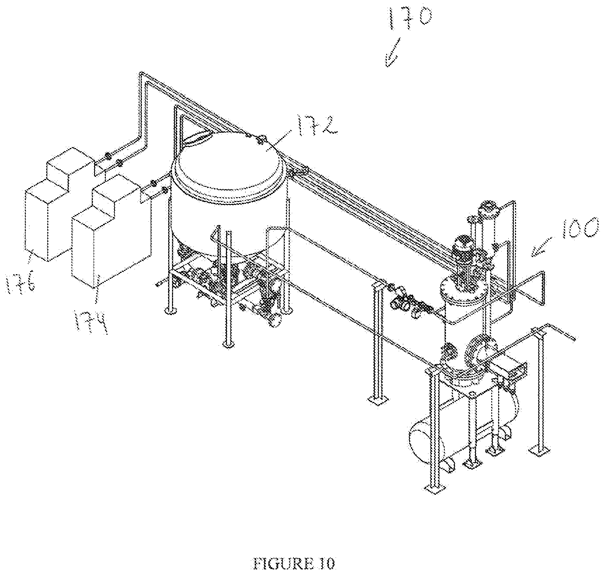

Figure 10 illustrates one exemplary pyrolysis system 170 for performing the method 150. The pyrolysis system 170 comprises the microwave reactor 100, a mixing tank fluidly connected to the reactor 100, a first source of thermal fluid 174 and a second source of thermal fluid 176. A first fluidic connection extends between the microwave reactor 100 and the mixing tank 172 for extracting part of the slurry phase contained in the microwave reactor 100 and injecting the extracted slurry phase into the mixing tank 172. A second fluidic connection also extends between the microwave reactor 100 and the mixing tank 172 for injecting the mixture contained in the mixing tank 172 into the microwave reactor 100.

The first source of thermal fluid is used for delivering a thermal fluid heated to a desired temperature to the mixing tank 172 and thereby controlling the temperature of the wall of the mixing tank 172. The second source of thermal fluid is used for delivering a thermal fluid heated to a desired temperature to the microwave reactor 100 and thereby controlling the temperature of the wall of the microwave reactor 100.

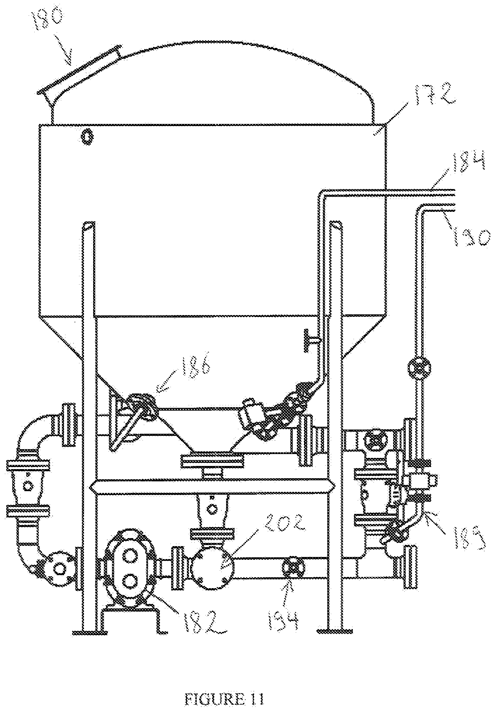

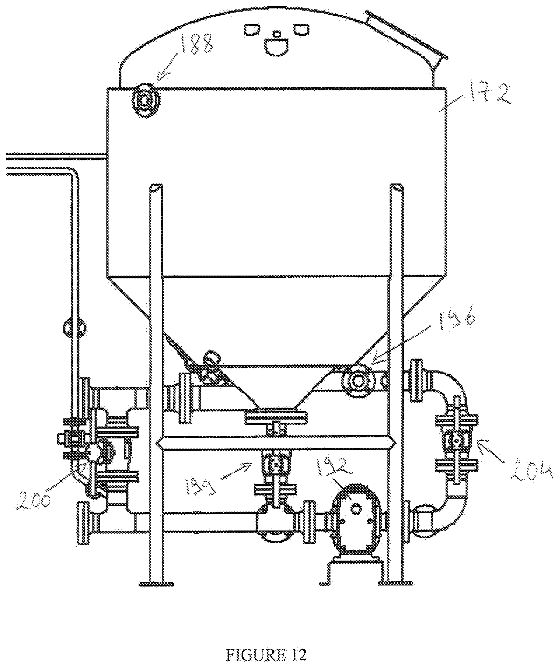

Figures 11 and 12 illustrate the mixing tank 172 and the fluidic connections between the mixing tank 170 and the microwave reactor 100.

It should be understood that the use of the microwave reactor 100 in the system 170 is exemplary only. For example, the reactor 12 could be used in the system 170. The mixing within the tank 172 is promoted using an agitator (not shown) and a recirculation pump 182. Part of the partially pyrolyzed product contained within the reactor 100 is injected into the mixing tank 172 via the fluidic connection 184. The product to be pyrolyzed is injected into the mixing tank 172 through port 180. The partially pyrolyzed product and the product to be pyrolyzed are mixed together thanks to the agitator. The mixing tank 172 is jacketed (i.e. it comprises a double wall in which fluid may flow) and insulated. A thermal fluid coming from the source 174 is circulated through the mixing tank jacket via ports 186 and 188 to control the temperature of the mixture within the mixing tank 172. The flow of partially pyrolyzed product coming from the reactor 100 may be filtered to remove particles and/or contaminants.

The mixed product is filtered via filter 189 to remove undissolved and solid contaminants prior to be injected into the reactor 100 via the fluidic connection 190. It should be understood that the filter casing volume and mesh size is selected based on the mass fraction and physical size of the contaminants to be filtered.

In one embodiment, the slurry viscosity in the mixing tank is measured by monitoring the electrical power consumed by the agitator motor (not shown) and the recirculation pump motor 192. Slurry samples may also be extracted through port 194 for off-line viscosity measurements. An in-line viscosity measurement device can also be installed on the recirculation pipes to measure slurry viscosity in-line.

In one embodiment, the level of product within the mixing tank 172 is measured by measuring the hydrostatic pressure at port 196. The injection can be done by partially closing valves 199 and 200 to build a pressure downstream of the recirculation pump 182 and upstream of the reactor feed connection 190. In another embodiment, the injection can also be done using a separate pump connected to the connection 190.

The mixing tank 172 can be completely emptied by opening drain port 202. Alternatively, the mixing tank 172 may be emptied by operating the recirculation pump 182 in a reverse mode, closing the valve 204 and draining through port 200.

For example, the system 170 may be used for pyrolyzing polystyrene. In this case, polystyrene is mixed with styrene oligomers. The styrene oligomers are generated in the reactor 100 injected into the mixing tank 172 at a temperature of about 250-300°C. The polystyrene is mixed and dissolved in the styrene oligomers slurry. The temperature of the slurry within the mixing tank 172 is maintained at a temperature of about 150°C, which is above the styrene oligomers' fusion temperature (i.e. 80-100°C). The temperature is also controlled to have a fast polystyrene dissolution rate and the desired dissolution selectivity. The mass flow rate of styrene oligomers from the depolymerisation reactor to the mixing tank is fixed and is filtered to remove particles (carbon black particles and others) with a centrifuge and/or filter upstream of the mixing tank. The mass flow rate of polystyrene to the mixing tank is controlled to maintain a specific slurry viscosity in the mixing tank and a specific rate of increase of slurry viscosity.

The mixing tank agitator and recirculation pump design and speed are set to eliminate dead zones and promote a uniform mixture.

Polystyrene is injected in the mixing tank at a rate to maintain a specific slurry viscosity and rate of increase in viscosity. The injection can be done manually or automatically with a feeding system. The injected polystyrene can be in solid and melt form.

The thermal fluid is used to maintain the slurry temperature above the styrene oligomers fusion temperature so that they remain liquid. The slurry temperature is also controlled to increase polystyrene dissolution rates and adjust the dissolution selectivity.

In one embodiment, the slurry in the mixing tank is injected in the reactor 100 at a rate that is controlled to maintain a fixed liquid level in the mixing tank 172.

In one embodiment, the pyrolysis system 170 further comprises a controller (not shown) for controlling the flow of products via pumps between the different elements of the system 170.

While the above description refers to at least one absorbing particle that is free of moving within the slurry phase in order to interact with the microwaves and heat the slurry phase, the absorbing particles may be replaced by at least one body made of microwave absorbing material and having a fixed position within the reactor. It should be understood that the number, shape, dimension and position of the absorbing body may vary. For example, at least one absorbing rod may be secured within the reactor at a fixed position. The proximal end of the absorbing rods may be secured to the bottom body within the reactor and extend longitudinally towards the top body of the reactor. The length of the absorbing rods may be chosen so that the distal end of the absorbing rods be aligned with the fill level of the reactor or located below the fill level of the reactor.

In one embodiment, the absorbing body is spaced apart from the coupler so that no hot spot may damage the coupler interface.

In one embodiment, the use of a fixed position absorbing body may decrease the agitation within the slurry phase and allow for higher reaction temperature to be reached.

The embodiments of the invention described above are intended to be exemplary only. The scope of the invention is therefore intended to be limited solely by the scope of the appended claims.

## Claims

1. A microwave pyrolysis system comprising:
   a microwave reactor comprising:

   an elongated hollow body extending between a bottom end and a top end, the elongated hollow body defining an internal cavity;
   a bottom body secured to the bottom end of the elongated hollow body; and
   a top body secured to the top end of the elongated hollow body, the elongated hollow body, the bottom body and the top body forming an enclosure for receiving a product to be pyrolyzed at a bottom section thereof up to a fill level, the fill level defining a minimal height for the product within the reactor,
   wherein the elongated hollow body is provided with a microwave injection aperture located below the fill level and the microwave injection aperture is sized and shaped for allowing a propagation of microwaves within the bottom section of the enclosure; and
   a controller for controlling a flow of the product injected into the reactor so that a top surface of the product once in the reactor be substantially aligned or coplanar with the fill level to ensure that the whole surface of the microwave injection aperture be covered with the product.

2. The microwave pyrolysis system of claim 1, wherein the microwave injection aperture is circular.

3. The microwave pyrolysis system of claim 2, wherein a diameter of the microwave injection aperture is one of equal to and greater than a wavelength of microwaves.

4. The microwave pyrolysis system of any one of claims 1 to 3, wherein the elongated hollow body comprises an elongated wall extending between an internal face facing the internal cavity and an external face opposite to the internal face, a distance between the internal and external faces defining a thickness of the elongated wall, the elongated wall being provided with at least one fluid receiving cavity extending between an inlet and an outlet for receiving therein a temperature control fluid in order to control a temperature of the product when received in the reactor, the at least one fluid receiving cavity extending at least within a bottom section of the elongated wall adjacent to the bottom body, the at least one fluid receiving cavity having a width being less than the thickness of the wall.

5. The microwave pyrolysis system of claim 4, wherein at least the bottom section of the elongated wall comprises a double wall structure, the double wall structure comprising an internal wall and an external wall spaced apart by a gap fluidly connected to the inlet and the outlet for propagating the temperature control fluid within the gap, the gap corresponding to the fluid receiving cavity.

6. The microwave pyrolysis system of claim 5, further comprising at least one tube inserted into the gap and fluidly connected to the inlet and the outlet.

7. The microwave pyrolysis system of claim 6, wherein the at least one tube is in physical contact with the internal wall and the external wall.

8. The microwave pyrolysis system of claim 6 or 7, wherein the elongated hollow body is tubular and the at least one tube extends around a circumference of the elongated hollow body.

9. The microwave pyrolysis system of claim 8, wherein the at least one tube has one of a serpentine shape and a helicoidal shape.

10. The microwave pyrolysis system of any one of claims 1 to 3, wherein the at least one fluid receiving cavity form at least one canal fluidly connected between the inlet and the outlet.

11. The microwave pyrolysis system of claim 10, wherein the at least one canal has one of a straight shape, a U-shape, a serpentine shape and an helicoidal shape.

12. The microwave pyrolysis system of any one of claims 4 to 11, wherein at least one of the inlet and the outlet are located on the elongated tubular body.

13. The microwave pyrolysis system of any one of claims 1 to 12, wherein at least one of the bottom body and the top body is removably secured to the elongated hollow body.

14. The microwave pyrolysis system of any one of claims 1 to 13, wherein the enclosure is further provided with at least one of:

an extraction aperture for extracting at least some of reacted product;
a gas aperture for extracting gases from the reactor;
a pressure relief aperture for protecting the reactor from overpressure; and
at least one sensor aperture for inserting at least one sensor into the reactor.

15. The microwave pyrolysis system of any one of claims 1 to 14, wherein the microwave reactor further comprises an agitating device for mixing the product within the reactor.

**Patentansprüche**

1. Mikrowellenpyrolysesystem, umfassend:

einen Mikrowellenreaktor, umfassend:

einen länglichen hohlen Körper, der sich zwischen einem unteren Ende und einem oberen Ende erstreckt, wobei der längliche hohle Körper einen inneren Hohlraum definiert;
einen unteren Körper, der an dem unteren Ende des länglichen hohlen Körpers gesichert ist; und
einen oberen Körper, der an dem oberen Ende des länglichen hohlen Körpers gesichert ist, wobei der längliche hohle Körper, der untere Körper und der obere Körper eine Hülle zum Aufnehmen eines zu pyrolysierenden Produkts an einem unteren Abschnitt davon bis zu einem Füllstand bilden, wobei der Füllstand eine Mindesthöhe für das Produkt innerhalb des Reaktors definiert,

wobei der längliche hohle Körper mit einer Mikrowelleneinspeisungsöffnung versehen ist, die sich unter dem Füllstand befindet, und die Mikrowelleneinspeisungsöffnung bemessen und geformt ist, um eine Ausbreitung von Mikrowellen innerhalb des unteren Abschnitts der Hülle zu erlauben; und
eine Steuereinrichtung zum Steuern einer Strömung des in den Reaktor eingespeisten Produkts, derart dass eine obere Oberfläche des Produkts, nachdem es sich im Reaktor befindet, im Wesentlichen mit dem Füllstand ausgerichtet oder komplanar ist, um sicherzustellen, dass die gesamte Oberfläche der Mikrowelleneinspeisungsöffnung von dem Produkt bedeckt ist.

2. Mikrowellenpyrolysesystem nach Anspruch 1, wobei die Mikrowelleneinspeisungsöffnung kreisförmig ist.

3. Mikrowellenpyrolysesystem nach Anspruch 2, wobei ein Durchmesser der Mikrowelleneinspeisungsöffnung eines von gleich oder größer als eine Wellenlänge von Mikrowellen ist.

4. Mikrowellenpyrolysesystem nach einem der Ansprüche 1 bis 3, wobei der längliche hohle Körper eine längliche Wand umfasst, die sich zwischen einer inneren Fläche, die dem inneren Hohlraum zugewandt ist, und einer äußeren Fläche erstreckt, die der inneren Fläche entgegengesetzt ist, ein Abstand zwischen der inneren und der äußeren Fläche eine Dicke der länglichen Wand definiert, die längliche Wand mit mindestens einem Fluidaufnahme-Hohlraum, der sich zwischen einem Einlass und einem Auslass erstreckt, zum Aufnehmen eines Temperaturregelungsfluids darin zum Regeln einer Temperatur des Produkts versehen ist, wenn es in dem Reaktor aufgenommen ist, wobei der mindestens eine Fluidaufnahmehohlraum sich mindestens innerhalb eines unteren Abschnitts der länglichen Wand benachbart zu dem unteren Körper erstreckt, wobei der mindestens eine Fluidaufnahme-Hohlraum eine Breite aufweist, die kleiner als die Dicke der Wand ist.

5. Mikrowellenpyrolysesystem nach Anspruch 4, wobei mindestens der untere Abschnitt der länglichen Wand eine Doppelwandstruktur umfasst, wobei die Doppelwandstruktur eine innere Wand und eine äußere Wand umfasst, die um eine Lücke voneinander beabstandet sind, die mit dem Einlass und dem Auslass zum Ausbreiten des Temperaturregelungsfluids innerhalb der Lücke fluidisch verbunden ist, wobei die Lücke dem Fluidaufnahme-Hohlraum entspricht.

6. Mikrowellenpyrolysesystem nach Anspruch 5, ferner umfassend mindestens ein Rohr, das in die Lücke eingesetzt ist und fluidisch mit dem Einlass und dem Auslass verbunden ist.

7. Mikrowellenpyrolysesystem nach Anspruch 6, wobei das mindestens eine Rohr in physikalischem Kontakt mit der inneren Wand und der äußeren Wand steht.

8. Mikrowellenpyrolysesystem nach Anspruch 6 oder 7, wobei der längliche hohle Körper rohrförmig ist und das mindestens eine Rohr sich um einen Umfang des länglichen hohlen Körpers herum erstreckt.

9. Mikrowellenpyrolysesystem nach Anspruch 8, wobei das mindestens eine Rohr eines von einer Serpentinenform und einer Schraubenform aufweist.

10. Mikrowellenpyrolysesystem nach einem der Ansprüche 1 bis 3, wobei der mindestens eine Fluidaufnahme-Hohlraum mindestens einen Kanal bildet, der zwischen dem Einlass und dem Auslass fluidisch verbunden ist.

11. Mikrowellenpyrolysesystem nach Anspruch 10, wobei der mindestens eine Kanal eine von einer geraden Form, einer U-Form, einer Serpentinenform oder einer Schraubenform aufweist.

12. Mikrowellenpyrolysesystem nach einem der Ansprüche 4 bis 11, wobei mindestens eines von dem Einlass und dem Auslass sich auf dem länglichen rohrförmigen Körper befindet.

13. Mikrowellenpyrolysesystem nach einem der Ansprüche 1 bis 12, wobei mindestens einer von dem unteren Körper und dem oberen Körper abnehmbar an dem länglichen hohlen Körper gesichert ist.

14. Mikrowellenpyrolysesystem nach einem der Ansprüche 1 bis 13, wobei die Hülle ferner mit mindestens einem von Folgendem versehen ist:

   einer Abführöffnung zum Abführen von mindestens einem Teil von reagiertem Produkt;
   einer Gasöffnung zum Abführen von Gasen von dem Reaktor;
   einer Druckentlastungsöffnung zum Schützen des Reaktors vor Überdruck; und
   mindestens einer Sensoröffnung zum Einsetzen mindestens eines Sensors in den Reaktor.

15. Mikrowellenpyrolysesystem nach einem der Ansprüche 1 bis 14, wobei der Mikrowellenreaktor ferner eine Rührvorrichtung zum Mischen des Produkts innerhalb des Reaktors umfasst.

**Revendications**

1. Système de pyrolyse à micro-ondes comprenant :

un réacteur à micro-ondes comprenant :

un corps creux allongé s'étendant entre une extrémité inférieure et une extrémité supérieure, le corps creux allongé définissant une cavité interne ;

un corps inférieur fixé à l'extrémité inférieure du corps creux allongé ; et

un corps supérieur fixé à l'extrémité supérieure du corps creux allongé, le corps creux allongé, le corps inférieur et le corps supérieur formant une enceinte pour recevoir un produit à pyrolyser au niveau de sa section inférieure jusqu'à un niveau de remplissage, le niveau de remplissage définissant une hauteur minimum pour le produit à l'intérieur du réacteur,

dans lequel le corps creux allongé est prévu avec une ouverture d'injection de micro-ondes située au-dessous du niveau de remplissage et l'ouverture d'injection de micro-ondes est dimensionnée et formée pour permettre une propagation des micro-ondes à l'intérieur de la section inférieure de l'enceinte ; et

un organe de commande pour commander un écoulement du produit injecté dans le réacteur de sorte qu'une surface supérieure du produit, une fois dans le réacteur, soit sensiblement alignée ou coplanaire avec le niveau de remplissage afin de garantir que toute la surface de l'ouverture d'injection de micro-ondes soit recouverte avec le produit.

2. Système de pyrolyse à micro-ondes selon la revendication 1, dans lequel l'ouverture d'injection de micro-ondes est circulaire.

3. Système de pyrolyse à micro-ondes selon la revendication 2, dans lequel un diamètre de l'ouverture d'injection de micro-ondes est soit égal, soit supérieur à une longueur d'onde des micro-ondes.

4. Système de pyrolyse à micro-ondes selon l'une quelconque des revendications 1 à 3, dans lequel le corps creux allongé comprend une paroi allongée s'étendant entre une face interne faisant face à la cavité interne et une face externe opposée à la face interne, une distance entre les faces interne et externe définissant une épaisseur de la paroi allongée, la paroi allongée étant prévue avec au moins une cavité de réception de fluide s'étendant entre une entrée et une sortie pour y recevoir un fluide de contrôle de température afin de contrôler une température du produit lorsqu'il est reçu dans le réacteur, la au moins une cavité de réception de fluide s'étendant au moins dans une section inférieure de la paroi allongée adjacente au corps inférieur, la au moins une cavité de réception de fluide ayant une largeur qui est inférieure à l'épaisseur de la paroi.

5. Système de pyrolyse à micro-ondes selon la revendication 4, dans lequel au moins la section inférieure de la paroi allongée comprend une structure à double paroi, la structure à double paroi comprenant une paroi interne et une paroi externe espacées par un interstice, raccordées de manière fluidique à l'entrée et à la sortie pour propager le fluide de contrôle de température à l'intérieur de l'interstice, l'interstice correspondant à la cavité de réception de fluide.

6. Système de pyrolyse à micro-ondes selon la revendication 5, comprenant en outre au moins un tube inséré dans l'interstice et raccordé, de manière fluidique, à l'entrée et à la sortie.

7. Système de pyrolyse à micro-ondes selon la revendication 6, dans lequel le au moins un tube est en contact physique avec la paroi interne et avec la paroi externe.

8. Système de pyrolyse à micro-ondes selon la revendication 6 ou 7, dans lequel le corps creux allongé est tubulaire et le au moins un tube s'étend autour d'une circonférence du corps creux allongé.

9. Système de pyrolyse à micro-ondes selon la revendication 8, dans lequel le au moins un tube a l'une parmi une forme de serpentin et une forme hélicoïdale.

10. Système de pyrolyse à micro-ondes selon l'une quelconque des revendications 1 à 3, dans lequel la au moins une cavité de réception de fluide forme au moins un canal raccordé, de manière fluidique, entre l'entrée et la sortie.

11. Système de pyrolyse à micro-ondes selon la revendication 10, dans lequel le au moins un canal a l'une parmi une forme droite, une forme de U, une forme de serpentin et une forme hélicoïdale.

12. Système de pyrolyse à micro-ondes selon l'une quelconque des revendications 4 à 11, dans lequel au moins l'une parmi l'entrée et la sortie est située sur le corps tubulaire allongé.

**13.** Système de pyrolyse à micro-ondes selon l'une quelconque des revendications 1 à 12, dans lequel au moins l'un parmi le corps inférieur et le corps supérieur est fixé, de manière amovible, au corps creux allongé.

**14.** Système de pyrolyse à micro-ondes selon l'une quelconque des revendications 1 à 13, dans lequel l'enceinte est en outre prévue avec au moins l'une parmi :

une ouverture d'extraction pour extraire au moins une certaine partie du produit qui a subi une réaction ;
une ouverture de gaz pour extraire les gaz du réacteur ;
une ouverture de décharge de pression pour protéger le réacteur contre une surpression ; et
au moins une ouverture de capteur pour insérer au moins un capteur dans le réacteur.

**15.** Système de pyrolyse à micro-ondes selon l'une quelconque des revendications 1 à 14, dans lequel le réacteur à micro-ondes comprend en outre un dispositif d'agitation pour mélanger le produit à l'intérieur du réacteur.

FIGURE 1

FIGURE 2

FIGURE 3

FIGURE 4

FIGURE 5

24

FIGURE 6

FIGURE 7

FIGURE 8

150

```
Starting a pyrolysis of an initial
product, thereby obtaining a          152
partially pyrolyzed product
```

```
Extracting part of the partially      154
pyrolyzed product
```

```
Mixing the partially pyrolyzed
product with a further product,       156
thereby obtaining a mixed product
```

```
Pyrolyzing the mixed product,         158
thereby obtaining a final product
```

FIGURE 9

FIGURE 10

FIGURE 11

FIGURE 12

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2018177994 A1
- US 2017114279 A1
- US 2017101584 A1
- WO 2018018154 A1
- EP 0680243 A2
- CN 207877644 U
- CN 101342475 B